# FASCICULE DE BREVET EUROPEEN

(11) **EP 0 359 321 B1**
(45) Date de publication et mention de la délivrance du brevet: **10.11.1993**
(21) Numéro de dépôt: 89202274.0
(22) Date de dépôt: 11.09.1989
(51) Int. Cl.: C08F 297/08, C08L 53/00, A47G 27/02

(54) **Bandelettes à base de polymère du propylène et leur utilisation pour la fabrication de gazon synthéthique**
Bändchenfasern aus Propylenpolymeren und deren Verwendung zur Herstellung von synthetischem Gras
Fibrillated tapes based on polymers of propylene, and their use in the manufacture of artificial grass

(30) Priorité: 16.09.1988 BE 8801069
(43) Date de publication de la demande: 21.03.1990
(73) Titulaire: SOLVAY (Société Anonyme), B-1050 Bruxelles (BE)
(72) Inventeur: Duez, Jean, B-1080 Bruxelles (BE); Van Houcke, Daniel, B-1150 Bruxelles (BE)
(74) Mandataire: Husemann, Claude

(56) Documents cités:
- EP-A- 0 259 940
- FR-A- 2 011 235
- GB-A- 970 479
- GB-A- 2 178 433
- US-A- 4 308 357

## Description

La présente invention concerne des bandelettes à base de polymère du propylène résistantes à la postfibrillation. Elle concerne également l'utilisation de ces bandelettes pour la fabrication de gazon synthétique.

Il est connu de fabriquer des bandelettes à base de polymères cristallins du propylène par découpage de films extrudés à partir de compositions comprenant pareils polymères. Pour la majorité des usages courants auxquels ces bandelettes sont destinées (tissage, corderie, ficellerie...), les propriétés mécaniques qui leur sont conférées par les homopolymères cristallins du propylène se sont révélées suffisantes. Pour certains usages de ces bandelettes, en particulier lorsqu'une résistance exceptionnelle à l'écrasement et/ou à l'arrachement est exigée (revêtements de sols...), les homopolymères du propylène ne sont toutefois pas entièrement satisfaisants. Pour des usages particulièrement exigeants de ces bandelettes, comme la fabrication de gazon synthétique décrite dans la demande de brevet européen EP-A-0259940 (Koninklijke Nijverdal - Ten Cate N.V.), un polypropylène tel qu'utilisé dans les exemples de cette demande ne convient pas bien : les brins obtenus par fibrillation mécanique des bandelettes ne résistent pas suffisamment à l'écrasement et à l'arrachement qui engendrent un phénomène de "postfibrillation" des bandelettes après des périodes inacceptablement courtes pour ce type d'article.

La présente invention vise à fournir des bandelettes ne présentant pas ces inconvénients.

La présente invention concerne donc des bandelettes à base de polymère du propylène résistantes à la postfibrillation, le polymère du propylène étant un copolymère à blocs de propylène et d'éthylène composé de segments de chaîne constitués d'homopolymère du propylène (appelés ci-après plus brièvement "homopolymère du propylène") et de segments de chaîne constitués de copolymère statistique contenant de l'éthylène (appelés ci-après plus brièvement "copolymère statistique") en une quantité comprise entre 2 et 20 % du poids total du copolymère à blocs, et du propylène, le copolymère à blocs comprenant plus de 50 % en poids de l'homopolymère du propylène et au moins 5 % en poids du copolymère statistique.

Les copolymères à blocs entrant dans la composition des bandelettes selon l'invention peuvent être fabriqués par n'importe quel procédé connu, en présence de systèmes catalytiques du type dit Ziegler-Natta à base de composés organométalliques et de solides contenant du trichlorure de titane. Généralement, on polymérise d'abord le propylène seul dans une première étape, et on polymérise ensuite le propylène et l'éthylène, dans une seconde étape, en présence du polymère obtenu au cours de la première. Chacune de ces étapes peut être réalisée par exemple en suspension dans un diluant hydrocarboné, en suspension dans le propylène liquide, ou encore en phase gazeuse, en continu ou en discontinu, dans le même réacteur ou dans des réacteurs distincts.

Des éléments complémentaires relatifs à ces copolymères à blocs et à leur fabrication peuvent être trouvés notamment dans les chapitres 4.4 et 4.7 de l'ouvrage "Block Copolymers" édité par D.C. Allport et W.H. Janes chez Applied Science Publishers Ltd. en 1973.

Les conditions de fabrication des copolymères à blocs entrant dans la composition des bandelettes selon l'invention sont choisies de manière que ces copolymères comprennent plus de 50 % en poids, par rapport à leur poids total, d'homopolymère du propylène.

Ces copolymères à blocs comprennent de préférence entre 60 et 95 % en poids d'homopolymère du propylène et entre 40 et 5 % en poids de copolymère statistique. Les meilleurs résultats sont obtenus lorsque ces copolymères à blocs comprennent entre 75 et 90 % en poids d'homopolymère du propylène et entre 25 et 10 % en poids de copolymère statistique.

La teneur en éthylène du copolymère statistique est telle que le poids d'éthylène, par rapport au poids total du copolymère à blocs, est compris de préférence entre 4 et 15 % en poids. Les meilleurs résultats sont obtenus lorsque 5 à 10 % du poids total du copolymère à blocs sont constitués d'éthylène.

Les conditions de fabrication des copolymères à blocs entrant dans la composition des bandelettes selon l'invention sont choisies de préférence de manière que leur poids moléculaire moyen, exprimé via l'indice de fluidité au fondu (MFI), soit suffisamment élevé. En général, le MFI (mesuré à 230°C sous une charge de 2,16 kg/cm² selon la norme ASTM D-1238) de ces copolymères à blocs est compris entre 0,1 et 10 g/10 min. De préférence, le MFI est compris entre 0,3 et 3 g/10 min. Il a été constaté que des copolymères à blocs de MFI trop élevé conduisent à des bandelettes dont la résistance à la fibrillation n'est pas suffisante.

Outre les copolymères à blocs définis ci-dessus, qui en constituent le composant principal (de préférence au moins 80 % en poids), les bandelettes selon l'invention peuvent encore contenir d'autres polyoléfines ainsi que des ingrédients conventionnels.

A titre d'autres polyoléfines pouvant entrer dans la composition des bandelettes, on peut citer les polymères de l'éthylène. Tous les polymères de l'éthylène commerciaux peuvent convenir, tels que les polyéthylènes à haute densité (supérieure à 0,960), à moyenne densité (comprise entre 0,930 et 0,960) et à basse densité (inférieure à 0,930). Les polyéthylènes linéaires à basse densité sont préférés parce qu'ils contribuent à améliorer la résistance à l'abrasion et la flexibilité des bandelettes.

Ces autres polyoléfines, lorsqu'elles sont présentes dans les bandelettes selon l'invention, en constituent en général 1 à 20 % du poids total, de préférence 2 à 15 % du poids total.

Les ingrédients conventionnels que l'on peut également incorporer dans les bandelettes comprennent, à titre non limitatif, les antioxydants, les stabilisants à la lumière, les agents facilitant la mise en oeuvre, les agents renforçants, les pigments, les colorants, les charges, les agents antistatiques ainsi que, spécialement dans le cas de l'application des bandelettes à la fabrication de gazon synthétique, les agents diminuant le coefficient de friction, notamment ceux (polyéthylène téréphtalate et polytétrafluoréthylène) divulgués dans le document EP-A-0259940 mentionné plus haut et dont tout le contenu est incorporé par référence dans la présente demande.

Ces ingrédients conventionnels peuvent être présents dans les bandelettes selon l'invention en quantités généralement comprises entre 0,01 et 15 % en poids, de préférence entre 0,1 et 10 % en poids.

L'incorporation optionnelle des autres polyoléfines et des ingrédients conventionnels dans les compositions à base de copolymère à blocs à partir desquelles sont fabriquées les bandelettes selon l'invention peut se faire par n'importe quel autre procédé connu. Cette incorporation peut se faire par exemple par mélange à sec, par extrusion d'un mélange des divers constituants, par la technique conventionnelle des "master-batches", etc.

La fabrication des bandelettes elles-mêmes, à partir des compositions décrites ci-avant, peut également s'opérer selon toutes les méthodes connues. On peut par exemple fabriquer un film primaire en extrudant lesdites compositions par les méthodes dites du "film soufflé" ou de la "filière plate". Selon cette dernière, le film issu de la filière est refroidi par cylindres à circulation interne de fluide ("chill roll") ou par bain d'eau. Ce film primaire est ensuite découpé en bandelettes qui sont étirées avant d'être bobinées.

Alternativement, le film primaire peut être un complexe multicouche obtenu par coextrusion de manière à obtenir une couche centrale de composition semblable à celle décrite ci-avant et une ou des couche(s) superficielle(s) à base des "autres polyoléfines" également décrites ci-avant.

Dans le cas, notamment, de l'utilisation de ces bandelettes pour la fabrication de gazon synthétique, elles peuvent être fibrillées mécaniquement en brins plus fins ayant l'aspect de brins de gazon et peuvent être soumises à l'un quelconque des traitements assouplissants connus et divulgués par exemple dans le document EP-A-0259940.

La réalisation du gazon synthétique peut s'effectuer conventionnellement à partir de ces bandelettes, éventuellement préalablement torsadées et fibrillées mécaniquement, comme il a été dit, en les touffetant au travers d'un support synthétique, tel qu'une toile tissée ou non, tous deux à base de polymère thermoplastique (par exemple le polypropylène).

### Exemple 1

On prépare une composition extrudable en incorporant, par la technique des mélanges-maîtres, dans un copolymère à blocs de propylène et d'éthylène stabilisé de manière conventionnelle, du polyéthylène linéaire à basse densité et du carbonate de calcium. La composition extrudable ainsi obtenue comprend :
- 90 % du copolymère à blocs, qui contient 82 % en poids d'homopolymère du propylène et 18 % en poids de copolymère statistique de propylène et d'éthylène. Ce copolymère à blocs dont la teneur en éthylène est de 7,75 % en poids est commercialisé par SOLVAY & Cie sous la dénomination Eltex P RF 003 PF et présente un MFI de 1,1 g/10 min;
- 8 % en poids de polyéthylène linéaire à basse densité;
- 2 % en poids de carbonate de calcium.
Cette composition granulée est extrudée sous forme d'un film de 95 µm d'épaisseur, refroidi par passage dans un bain d'eau à une température de 37°C, découpé en bandelettes qui sont étirées à un taux d'étirage de 1:4,1 environ dans un four d'étirage porté à une température de 130°C, et fibrillées mécaniquement.

Ces bandelettes sont touffetées à travers une toile en polypropylène de manière à réaliser un tapis de gazon synthétique dont des échantillons (longueur : 1,2 m; largeur : 12 cm) sont soumis à un test d'écrasement et d'abrasion sur un appareil Tretrad BMX-B, selon le projet de norme DIN 54322 (1000 tours). La résistance à l'écrasement et à l'arrachement (postfibrillation) est appréciée en mesurant la portion, exprimée en %, de la longueur initiale des bandelettes de l'échantillon qui a été arrachée.

Dans le cas de l'échantillon de l'exemple 1, seuls 3,3 % de la longueur initiale ont été arrachés.

Cette mesure est complétée par un examen visuel de l'échantillon après le test d'écrasement.

Dans le cas de l'échantillon de l'exemple 1, pratiquement aucune usure superficielle n'est perceptible. Les bandelettes de l'échantillon ne sont ni aplaties, ni postfibrillées.

### Exemple 1R

Cet exemple est fourni à titre de comparaison.

On reproduit l'exemple 1 sauf que l'on remplace le copolymère à blocs par un homopolymère commercialisé par SHELL sous la dénomination Carlona P.

Des échantillons préparés comme à l'exemple 1 sont soumis au test décrit à cet exemple. A l'issue de ce test, 4 % de la longueur initiale des bandelettes de l'échantillon ont été arrachés. Les bandelettes de l'échantillon sont aplaties et postfibrillées.

### Exemple 2R

Cet exemple est fourni à titre de comparaison.

On reproduit l'exemple 1 sauf que l'on remplace le copolymère à blocs par un copolymère statistique du propylène et de l'éthylène contenant 1,9 % en poids d'éthylène.

Des échantillons préparés comme à l'exemple 1 sont soumis au test décrit à cet exemple. A l'issue de ce test, 15,5 % de la longueur initiale des bandelettes de l'échantillon ont été arrachés. Les bandelettes de l'échantillon présentent une postfibrillation que ne présentent pas celles selon l'exemple 1.

### Exemples 2 et 3

On reproduit l'exemple 1 avec des copolymères à blocs légèrement différents de celui utilisé à cet exemple.

Les caractéristiques des essais et leurs résultats sont rassemblés au tableau ci-après.

**Tableau**

| | Exemple 2 | Exemple 3 |
|---|---|---|
| Teneur en homopolymère du propylène du copolymère à blocs (% pds) | 85 | 79 |
| Teneur en éthylène du copolymère à blocs (% pds) | 6,5 | 9 |
| MFI du copolymère à blocs (g/10 min) | 0,65 | 2,5 |
| % de longueur arrachée | 3,5 | 3,5 |
| Etat de surface (appréciation visuelle) | . pas d'aplatissement | légère postfibrillation |
| | . pas de postfibrillation | |

## Revendications

1. Bandelettes à base de polymère du propylène résistantes à la postfibrillation, caractérisées en ce que le polymère du propylène est un copolymère à blocs de propylène et d'éthylène composé de segments de chaîne constitués d'homopolymère du propylène et de segments de chaîne constitués de copolymère statistique contenant de l'éthylène en une quantité comprise entre 2 et 20 % du poids total du copolymère à blocs, et du propylène, le copolymère à blocs comprenant plus de 50 % en poids de l'homopolymère du propylène et au moins 5 % en poids du copolymère statistique.

2. Bandelettes suivant la revendication 1, caractérisées en ce que le copolymère à blocs comprend entre 75 et 90 % en poids d'homopolymère du propylène et 25 à 10 % en poids de copolymère statistique.

3. Bandelettes suivant la revendication 1, caractérisées en ce que l'indice de fluidité au fondu du copolymère à blocs (230°C; charge : 2,16 kg/cm²) est compris entre 0,1 et 10 g/10 min.

4. Bandelettes suivant les revendications 1 à 3, caractérisées en ce qu'elles contiennent en outre du polyéthylène linéaire à basse densité en une quantité de 1 à 20 % du poids total.

5. Bandelettes suivant l'une quelconque des revendications 1 à 4, caractérisées en ce qu'elles contiennent en outre un agent réduisant le coefficient de friction.

6. Utilisation des bandelettes suivant l'une quelconque des revendications 1 à 5 pour la fabrication de gazon synthétique.

## Claims

1. Slit film yarn based on propylene polymer and resistant to postfibrillation, characterised in that the propylene polymer is a block copolymer of propylene and ethylene made up of chain segments consisting of propylene homopolymer and of chain segments consisting of random copolymer containing ethylene in a quantity of between 2 and 20 % of the total weight of the block copolymer, and propylene, the block copolymer comprising more than 50 % by weight of the propylene homopolymer and at least 5 % by weight of the random copolymer.

2. Slit film yarn according to Claim 1, characterised in that the block copolymer comprises between 75 and 90% by weight of propylene homopolymer and 25 to 10 % by weight of random copolymer.

3. Slit film yarn according to Claim 1, characterised in that the melt flow index of the block copolymer (230°C; load: 2.16 kg/cm²) is between 0.1 and 10 g/10 min.

4. Slit film yarn according to Claims 1 to 3, characterised in that it additionally contains linear low-density polyethylene in a quantity of 1 to 20 % of the total weight.

5. Slit film yarn according to any one of Claims 1 to 4, characterised in that it additionally contains an agent reducing the friction coefficient.

6. Use of the slit film yarn according to any one of Claims 1 to 5 for the manufacture of synthetic lawn.

## Patentansprüche

1. Bändchenfasern aus Propylenpolymeren, die gegen Nachfibrillieren resistent sind, dadurch gekennzeichnet, daß das Propylenpolymer ein Propylen- und Ethylen-Blockcopolymer ist, zusammengesetzt aus Kettensegmenten, gebildet von Propylenhomopolymeren und Kettensegmenten, gebildet von statistischem Copolymer, das Ethylen in einer Menge zwischen 2 und 20 % des Gesamtgewichts des Blockcopolymers und Propylen enthält, wobei das Blockcopolymer mehr als 50 Gew.-% des Propylenhomopolymers und wenigstens 5 Gew.-% des statistischen Copolymers umfaßt.

2. Bändchenfasern nach Anspruch 1, dadurch gekennzeichnet, daß das Blockcopolymer zwischen 75 und 90 Gew.-% Propylenhomopolymer und 25 bis 10 Gew.-% statistisches copolymer umfaßt.

3. Bändchenfasern nach Anspruch 1, dadurch gekennzeichnet, daß die Weichheitszahl in geschmolzenem Zustand des Blockcopolymers (230°C; Belastung: 2,16 kg/cm²) zwischen 0,1 und 10 g/10 min liegt.

4. Bändchenfasern nach den Ansprüchen 1 bis 3, dadurch gekennzeichnet, daß sie außerdem lineares Polyethylen mit geringer Dichte in einer Menge von 1 bis 20 % des Gesamtgewichts enthalten.

5. Bändchenfasern nach einem der Ansprüche 1 bis 4, dadurch gekennzeichnet, daß sie außerdem ein Mittel zur Reduktion des Reibungskoeffizienten enthalten.

6. Verwendung der Bändchenfasern nach einem der Ansprüche 1 bis 5 zur Herstellung von synthetischem Gras.
